# EUROPÄISCHE PATENTSCHRIFT

(11) **EP 1 401 171 B1**
(45) Veröffentlichungstag und Bekanntmachung des Hinweises auf die Patenterteilung: **28.02.2007**
(21) Anmeldenummer: 03020073.7
(22) Anmeldetag: 04.09.2003
(51) Int. Cl.: H04L 29/06

(54) **Elektronische Vorrichtung für ein Bussystem**
Electronic apparatus for a bussystem
Dispositif électronique pour un système bus

(30) Priorität: 20.09.2002 DE 10243781
(43) Veröffentlichungstag der Anmeldung: 24.03.2004
(73) Patentinhaber: SICK AG, 79183 Waldkirch (DE)
(72) Erfinder: Fehrer, Detlef, Dr., 79194 Gundelfingen (DE); Heidepriem, Sebastian, 79395 Neuenburg (DE); Stadler, Edgar, 79312 Emmendingen (DE); Vollmer, Urs, 79104 Freiburg (DE)
(74) Vertreter: Manitz, Finsterwald & Partner GbR

(56) Entgegenhaltungen:
- EP-A- 1 091 536
- WO-A-02/48856
- US-A- 5 390 301
- US-A- 5 896 383

## Beschreibung

Die vorliegende Erfindung betrifft eine einen Sensor, einen Aktor oder eine Steuerung bildende elektronische Vorrichtung mit einem Steuerabschnitt sowie einer integrierten Busschnittstelle, über die die Vorrichtung an einen Datenbus zur Kommunikation der Vorrichtung mit zumindest einer weiteren an den Datenbus angeschlossenen, einen Sensor, einen Aktor oder eine Steuerung bildenden Vorrichtung anschließbar ist, und mit einem gerätespezifischen Definitionsabschnitt, in dem für die Kommunikation und/oder Konfiguration der elektronischen Vorrichtung erforderliche Parameter abgelegt sind, wobei der gerätespezifische Definitionsabschnitt in einem gerätespezifischen Format vorliegt und die Parameter über den Steuerabschnitt zugreifbar sind.

In vielen Einsatzgebieten der Automatisierungstechnik kommunizieren heutzutage unterschiedliche Geräte über ein Bussystem miteinander. Dabei ist eine Vielzahl von unterschiedlichen Bussystemen basierend auf unterschiedlichen Kommunikationsprotokollen bekannt. Beginnend beim physikalischen Layer bis hin zur Anwendungsschnittstelle der einzelnen Geräte sind die Feldbusspezifikationen entsprechend ihrem Einsatzgebiet jeweils spezifisch definiert.

Bei der Integration eines Gerätes in eine größere Automatisierungslösung muss zwischen den einzelnen Komponenten eine große Menge von Informationen über den Datenbus ausgetauscht werden. Abhängig von der jeweiligen Komponente können die Inhalte dieser Informationen sehr unterschiedlich sein. So können diese Informationen beispielsweise die topologische Anlagenstruktur, Parameter des Kommunikationsverhaltens oder auch Visualisierungseigenschaften für ein Konfigurationsprogramm (Engineering Tool) betreffen. Die von dem umgebenden System benötigte Information wird in der Regel durch eine Datei, die eine Gerätebeschreibung enthält, übergeben. Diese Gerätebeschreibung ist von dem jeweiligen Gerät abhängig und wird im Rahmen dieser Anmeldung auch als gerätespezifischer Definitionsabschnitt bezeichnet. Die Gerätebeschreibung liegt in einem gerätespezifischen Format vor, damit eine programmtechnische Auswertung der Gerätebeschreibung möglich ist. Da dieses gerätespezifische Format nicht universell ist, sondern sich von System zu System unterscheidet, muss für die Integration eines Gerätes in eine bestimmte Umgebung jeweils die adäquate Gerätebeschreibung neu erstellt werden. Der Entwickler benötigt hierzu neben seinen gerätespezifischen Fachkenntnissen auch sehr weitgehendes Know-how über die jeweilige verwendete Beschreibungssprache.

Ein weiteres Problem liegt darin, dass die Zuordnung von Parametern und Funktionen zu konkreten Variablen, Adressen oder Kanälen üblicherweise bei verschiedenen Feldbussen in so genannten Profilen (Geräteprofilen) vorgenommen wird. Diese Profile sind jedoch nicht nur vom jeweiligen Feldbus, sondern auch vom jeweiligen Anwendungsgebiet abhängig. Soll ein Gerät in verschiedenen Anwendungsfeldern eingesetzt werden, so muss in jedem Einzelfall eine Anpassung an das betreffende Profil vorgenommen werden. Dies gilt insbesondere auch, wenn die dem Profil zugrunde liegende Norm verändert wird. Selbst wenn keine Änderung im verwendeten physikalischen Bus erfolgt, kann ein gegebenes Objekt im Gerät abhängig von der jeweiligen Anwendung auf unterschiedliche Strukturen abgebildet werden.

Wenn ein Gerät in einem neuen Anwendungsfeld eingesetzt werden soll oder sich die Definition des Anwendungsprofils ändert, ist es daher notwendig, Anpassungen an dem Steuerabschnitt des Gerätes vorzunehmen. Diese Anpassungen setzen detaillierte Kenntnis sowohl des Gerätes als auch des Anwendungsprofils voraus.

Damit ein Gerät (Sensor, Aktor oder Steuerung) in der Automatisierungstechnik an einer beliebigen Kommunikationsverbindung betrieben werden kann (beispielsweise eine Sensoranbindung an einen Feldbus), muss das Gerät dafür spezifisch konfiguriert werden. Geräte, die kein eigenes Display sowie entsprechende Eingabeelemente besitzen, benötigen für die Konfigurierung eine externe Konfigurationssoftware (Bediensoftware) in Verbindung mit einer Beschreibung der Geräteeigenschaften. Ist diese Beschreibung nicht vorhanden, so ist eine Kommunikation zwischen der Konfigurationssoftware und dem Gerät unmöglich. Sollen neue Gerätevarianten eingeführt werden, so ist es daher unabdingbar, dass die Konfigurationssoftware an diese neuen Gerätevariante angepasst und entsprechend aktualisiert wird.

Ein weiterer Problembereich besteht darin, dass bei der Parametrierung (Konfiguration) von Feldgeräten zahlreiche Abhängigkeiten zwischen den Geräteparametern beachtet werden müssen. Bestimmte Werte oder Wertebereiche sind für einzelne Parameter unter Umständen nur zulässig, wenn andere Parameter bestimmte vorgegebene Werte besitzen. Somit besteht eine Abhängigkeit zwischen einzelnen Geräteparametern. Insbesondere nach einer Änderung von Geräteparametern muss das Gerät daher überprüfen, ob der neue Parametersatz insgesamt alle vorgegebenen Bedingungen erfüllt. Ist zumindest eine der vorgegebenen Bedingungen verletzt, so muss in einen geeigneten Fehlerzustand gewechselt werden.

Dabei ist es sinnvoll, dass bei einer Parametrierung über ein Konfigurationstool (an einem Computer) bereits dieses Konfigurationstool alle vorgegebenen Bedingung überprüft und auch bei nicht angeschlossenem Gerät nach Eingabe von entsprechenden fehlerhaften Parametern am Bildschirm gegebenenfalls eine Warnung ausgibt. Da üblicherweise die entsprechenden Überprüfungen in dem Konfigurationsprogramm unabhängig von den entsprechenden Prüfungen innerhalb des Geräts programmiert sind, ist es nicht ausgeschlossen, dass aufgrund von fehlerhafter Programmierung Unterschiede in der Bewertung der zu überprüfenden Bedingungen bestehen. Somit kann ein von der Konfigurationssoftware in der Entwicklungsphase als zulässig akzeptierter Parametersatz im Betrieb zu einem Stillstand des Gerätes oder einem sonstigen Fehler führen. Darüber hinaus ist die doppelte Ausführung der entsprechenden Softwareteile innerhalb des Gerätes und innerhalb der Konfigurationssoftware aufwändig und verursacht zusätzliche Kosten. Die doppelte Programmierung wird insbesondere deshalb als erforderlich angesehen, da die entsprechenden Programmteile auf verschiedenen Plattformen (verschiedene Hardware, verschiedene Programmiersprachen), nämlich einerseits innerhalb des Gerätes und andererseits innerhalb der Konfigurationssoftware auf einem Computer, beispielsweise einem PC oder einem Handheld (PDA), ablaufen.

Aus der US-A-5 390 301 ist ein Verfahren zur Kommunikation zwischen einem Gerätetreiber und einem Betriebssystemkern bekannt, welches eine standardisierte, generische Datenstruktur verwendet, so dass die Kommunikation sowohl vereinfacht wird als auch bekannte Beschränkungen bei der Kommunikation aufgehoben werden.

Es ist eine Aufgabe der vorliegenden Erfindung, eine kostengünstige und flexible Lösung anzugeben, mit der unterschiedliche elektronische Vorrichtungen der eingangs genannten Art, wie beispielsweise Sensoren, Aktoren und Steuerungen, an unterschiedlichste Bussysteme anschließbar sind. Dabei soll auch der Aufwand für den Einsatz der Geräte in unterschiedlichen Anwendungsgebieten reduziert sowie die Konfiguration der Geräte vereinfacht werden. Gleichzeitig sollen fehlerhafte Parametrierungen der Geräte zuverlässig erkennbar sein.

Diese Aufgabe wird erfindungsgemäß ausgehend von einer elektronischen Vorrichtung der eingangs genannten Art dadurch gelöst, dass ein in einem geräteunabhängigen, standardisierten Format vorliegender, universeller Definitionsabschnitt vorgesehen ist, in dem alle für die Kommunikation, Funktion und Konfiguration erforderlichen Parameter der elektronischen Vorrichtung sowie zusätzliche, die elektronische Vorrichtung kennzeichnende Parameter abgelegt sind, und dass der gerätespezifische Definitionsabschnitt automatisch aus dem universellen Definitionsabschnitt erzeugt wird.

Erfindungsgemäß wird somit eine universelle Gerätebeschreibung zur Verfügung gestellt, die alle Facetten und Informationen eines Gerätes abdeckt. Dabei ist diese universelle Gerätebeschreibung in einem einheitlichen, geräteunabhängigen, standardisierten Format formuliert, so dass für die Weiterverarbeitung der Informationen eine Vielzahl von Werkzeugen zur Verfügung steht. Aufgrund der standardisierten universellen Gerätebeschreibung kann zur Erzeugung der gerätespezifischen Gerätebeschreibung der für die jeweilige Anwendung relevante Anteil durch einen Compiler oder Generator automatisch extrahiert und in das vorgegebene gerätespezifische Format gebracht werden.

Der jeweilige Compiler muss zwar für jede Anwendung neu erstellt werden, nach Vorliegen eines Compilers kann jedoch dann die gerätespezifische Beschreibung für beliebig viele unterschiedliche Geräte automatisch generiert werden. Jeder Entwickler benötigt ausschließlich Kenntnisse in der Sprache, in der die universelle Gerätebeschreibung abgelegt ist. Spezifische Kenntnisse in den jeweiligen gerätespezifischen Sprachen sind nicht erforderlich, da die Generierung der gerätespezifischen Beschreibung automatisch erfolgt. Weiterhin ist durch die automatische Umsetzung gewährleistet, dass keine Parameter vergessen oder falsch interpretiert werden.

Abhängig von der jeweiligen Umgebung kann der Compiler dabei jeweils nur die erforderliche Teilmenge aus der universellen Beschreibung umsetzen, die für die jeweilige Anwendung gerade erforderlich ist.

Nach einer vorteilhaften Ausführungsform der Erfindung sind aus dem universellen Definitionsabschnitt weitere gerätespezifische Elemente, insbesondere Steuerabschnittselemente, herstellerspezifische Geräteprofile, Funktionselemente einer für die elektronische Vorrichtung vorgesehenen Konfigurationseinheit und/oder Dokumentationen automatisch erzeugbar.

Neben den gerätespezifischen technischen Gerätebeschreibungsdateien können somit aus der universellen Gerätebeschreibung unmittelbar automatisch auch Beschreibungen völlig anderer Art, wie etwa Code für Schnittstellentreiber (Steuerabschnittselemente) oder Dokumentationen erzeugt werden. Der auf diese Weise automatische erzeugte Code für Schnittstellentreiber kann dann beispielsweise bei der Entwicklung des Gerätes in das jeweilige Projekt eingebunden und zur Erzeugung des Steuerabschnittes übersetzt werden. Der Code wird dabei vorteilhaft automatisch in der Programmiersprache erzeugt, in der auch die Applikation des Gerätes programmiert wird. Dabei kann es sich beispielsweise um Programmiersprachen wie C oder C++ handeln. Grundsätzlich ist jedoch auch jede sonstige Programmiersprache denkbar.

Nach einer weiteren vorteilhaften Ausführungsform der Erfindung ist das herstellerspezifische Geräteprofil unabhängig von anwendungsspezifischen Gegebenheiten, wie beispielsweise Busprotokoll, Anwendungsfeld oder dergleichen, wobei aus dem herstellerspezifischen Geräteprofil ein anwendungsspezifischen Geräteprofil erzeugbar ist. Erfindungsgemäß erfolgt somit eine Trennung von herstellerspezifischen, auf das Gerät bezogenen Profildefinitionen von den von dem jeweiligen Anwendungsgebiet abhängigen anwendungsspezifischen Geräteprofilen, die beispielsweise von dem verwendeten Feldbus abhängen. Es erfolgt somit eine Entkoppelung von Gerät und Anwendungsfeld, was mehrere Vorteile mit sich bringt. Auf diese Weise ist während der Entwicklung des Gerätes nur einmalig eine Abbildung der Geräteparameter auf die jeweiligen Entsprechungen in dem herstellerspezifischen Profil vorzunehmen. Diese Teilabbildung erfolgt einmalig pro Gerät und setzt insbesondere keine Kenntnis von Anwendungsprofilen voraus.

Die zweite Teilabbildung - von dem herstellerspezifischen Profil auf das Anwendungsprofil - erfolgt separat, jeweils einmal pro Anwendungsprofil. Für diesen Schritt benötigt der Entwickler keine Kenntnis über Interna der Geräte, da die gleiche Teilabbildung für alle Geräte, d. h. auch für künftig erst zu entwickelnde Geräte, zur Verfügung steht. Bei einer Veränderung des Anwendungsprofils oder bei Neuaufnahme eines weiteren Profils sind nur bezüglich der zweiten Teilabbildung Änderungen vorzunehmen, die Geräte selbst sind davon nicht betroffen.

Durch diese Entkoppelung von herstellerspezifischem Geräteprofil und anwendungsspezifischem Geräteprofil wird die Menge der insgesamt erforderlichen Abbildungen stark eingeschränkt. Ohne eine solche Entkoppelung sind für den Einsatz von n Geräten in m Applikationsfeldern n*m Abbildungen der Geräteparameter auf das jeweilige Anwendungsprofil erforderlich. Mit der erfindungsgemäßen Entkoppelung reduziert sich die Anzahl der kombinatorischen Möglichkeiten auf lediglich n+m Einzelabbildungen. Jedes Gerät muss unter Zugrundelegung der erfindungsgemä-ßen Entkoppelung - unabhängig von der gewünschten Anwendung - jeweils nur einmal, nämlich auf das herstellerspezifische Profil, angepasst werden. Weiter wird für jedes Anwendungsfeld genau eine Abbildung des herstellerspezifischen Profils auf das jeweilige Anwendungsprofil erstellt, die dann für alle Geräte genutzt werden kann. Durch die Einbeziehung des herstellerspezifischen Profils als eine zusätzliche Beschreibungsebene erfolgt somit eine Entkoppelung von Gerät und Anwendungsfeld und damit eine Reduzierung der Entwicklungskosten.

Nach einer weiteren bevorzugten Ausführungsform der Erfindung sind zumindest für einen Teil oder für alle in dem universellen Definitionsabschnitt abgelegten Parameter jeweils zusätzlich Versionsinformationen abgelegt. Diese Versionsinformationen können vielfach genutzt werden. Beispielsweise können entsprechende Informationen in den automatisch generierten Dokumentationen enthalten sein oder eine vorgesehene Konfigurationseinheit kann aufgrund der Versionsinformationen die Geräte korrekt parametrieren und im Falle eines unbekannten Parameters zumindest vorgegebene Standardparameter anzeigen.

Bevorzugt sind in dem universellen Definitionsabschnitt funktionale Abhängigkeiten zwischen einzelnen Parametern abgelegt. Diese funktionalen Abhängigkeiten werden in Form von Prädikaten (Bedingungen) formuliert. Jede Bedingung kann beliebig viele Parameter einbeziehen. Ist eine Abhängigkeit verletzt, so wird der Wert der Bedingung auf "FALSE" (logisch falsch) gesetzt, wodurch ein ungültiger Parametersatz angezeigt wird. Diese Abhängigkeitsprüfung besitzt keine Seiteneffekte, d. h. alle übrigen Parameterwerte bleiben unverändert.

Die funktionalen Abhängigkeiten können unmittelbar in der für die elektronische Vorrichtung vorgesehenen Programmiersprache (beispielsweise C oder C++) formuliert sein, so dass sehr komplexe Abhängigkeiten definiert werden können. Grundsätzlich können die Abhängigkeiten auch in anderen geeigneten Sprachen definiert sein. Jede Abhängigkeit wird als Funktion mit logischem Rückgabewert implementiert und kann bei der Umsetzung in den gerätespezifischen Definitionsabschnitt automatisch in den Code für die Firmware des Gerätes übernommen werden.

Insbesondere wenn eine Konfigurationseinheit in Form eines Konfigurationsprogramms zur Konfiguration der elektronischen Vorrichtung vorgesehen ist, wie es weiter unten beschrieben ist, können erfindungsgemäß die in dem universellen Definitionsabschnitt abgelegten funktionalen Abhängigkeiten automatisch in Funktionselemente für die Konfigurationseinheit umgesetzt werden. So wird aus den beispielsweise in C vorliegenden Abhängigkeitsfunktionen eine äquivalente Formulierung in der für das Konfigurationsprogramm vorgesehenen Sprache (beispielsweise Java) erzeugt, die in das Konfigurationsprogramm eingebunden wird. Auf diese Weise ist gewährleistet, dass sowohl im Gerät wie auch in dem Konfigurationsprogramm identische Abhängigkeitsprüfungen durchgeführt werden. Die eigentliche Programmierung der Bedingungen erfolgt somit nur einmalig, so dass Unterschiede in den Abhängigkeitsprüfungen im Gerät und in dem Konfigurationsprogramm ausgeschlossen sind.

Auf diese Weise kann bereits bei einer Offline-Parametrierung mit dem Softwareprogramm ohne angeschlossenes Gerät die Gültigkeit eines jeweiligen Parametersatzes verbindlich geprüft werden. Eine Online-Parametrierung mit angeschlossenem Gerät ist ebenfalls uneingeschränkt möglich und zwar sowohl über das Konfiguationsprogramm als auch über andere Kommunikationswege. Erfolgt die Parametrierung über das Konfigurationsprogramm, so erfolgt die Abhängigkeitsprüfung doppelt, einmal im Konfigurationsprogramm und zusätzlich unmittelbar im Gerät, während bei einer Parametrierung beispielsweise über eine SPS (Speicher Programmierbare Steuerung) die elektronische Vorrichtung selbständig aufgrund des in dem Steuerabschnitt eingebundenen Code für die Parameterüberprüfung (Steuerabschnittselement) die Gültigkeit des Parametersatzes überprüft.

Nach einer weiteren vorteilhaften Ausführungsform der Erfindung ist der universelle Definitonsabschnitt durch eine oder mehrere Dateien gebildet. Diese Dateien können dabei beispielsweise im XML-Format vorliegen. Das XML-Format ist vorteilhaft, da es einen formalen Standard definiert, der die Weiterverarbeitung der in dem universellen Definitionsabschnitt enthaltene Informationen mit einer Vielzahl von Werkzeugen ermöglicht. Weiterhin besitzt XML den Vorteil, dass die Informationen physikalisch verteilt in mehreren Dateien abgelegt werden können und trotzdem eine Gesamtsicht als ein einziges Dokument beibehalten wird. Grundsätzlich ist auch jedes andere Format geeignet, welches die formalen Erfordernisse erfüllt. Die beiden Hauptbestandteile des universellen Definitionsabschnittes werden von der Beschreibung der Kommunikation sowie der Visualisierung gebildet. Das Format ist jedoch offen und kann somit nach Bedarf um weitere Komponenten erweitert werden.

Nach einer weiteren bevorzugten Ausführungsform der Erfindung ist der gerätespezifische Definitionsabschnitt innerhalb der elektronischen Vorrichtung vorgesehen. Auf diese Art und Weise ist eine sehr einfache Adressierung der Parameterinformationen, beispielsweise von einer anderen an dem Datenbus angeschlossenen Vorrichtung oder von dem Konfigurationsprogramm aus möglich. Allerdings hat diese Lösung den Nachteil, dass innerhalb des Gerätes relativ hohe Anforderungen an den Speicherbedarf gestellt werden.

Vorteilhaft ist es auch möglich, dass der gerätespezifische Definitionsabschnitt von der elektronischen Vorrichtung getrennt vorgesehen ist. Dabei können innerhalb des gerätespezifischen Definitionsabschnittes automatisch generierte Verweise auf außerhalb der elektronischen Vorrichtung vorhandene gerätespezifische Elemente, insbesondere für die elektronische Vorrichtung vorgesehene Konfigurationseinheit enthalten sein. Diese Steuerelemente können beispielsweise Bibliothekselemente eines Konfigurationsprogramms darstellen, die aus dem universellen Definitionsabschnitt automatisch generiert wurden.

Vorteilhaft ist der gerätespezifische Definitionsabschnitt für unterschiedliche elektronische Vorrichtungen von einer an den Datenbus angeschlossenen Steuereinheit, insbesondere von einer für die elektronische Vorrichtung vorgesehene Konfigurationseinheit über einen einheitlichen, standardisierten, über den Datenbus zu dem Steuerabschnitt transportierten Befehl adressierbar. Somit kann jede an den Datenbus angeschlossene Vorrichtung einschließlich einer Kommunikationseinheit über einen einzigen vorgegebenen Standardbefehl den gerätespezifischen Definitionsabschnitt oder einen Teil dieses Abschnittes abrufen, woraufhin aufgrund der abgerufenen Informationen gerätespezifische Vorgänge ausgelöst werden können.

Beispielsweise kann der gerätespezifische Definitionsabschnitt von der Konfigurationseinheit adressierbar und auswertbar sein, woraufhin die Konfigurationseinheit abhängig von aus dem gerätespezifischen Definitionsabschnitt ausgelesenen Parametern einen unterschiedlichen gerätespezifischen Funktionsumfang besitzt. Die Konfigurationseinheit kann somit zunächst einen für alle Vorrichtungen einheitlich standardisierten Abrufbefehl über den Datenbus an das jeweils zu konfigurierende Gerät senden, woraufhin dieses beispielsweise für die Visualisierung des entsprechenden Konfigurationsprogramms erforderliche Parameter zurückliefert. Solche Parameter können beispielsweise die Größe von gerätespezifischen Parameterlisten, der Inhalt solcher Parameterlisten, Hilfetexte oder Tooltipps sein. Das Konfigurationsprogramm interpretiert die aufgenommenen Parameter und erzeugt eine entsprechende Konfigurationsoberfläche. Über diese Konfigurationsoberfläche kann dann eine Konfiguration der gerätespezifischen Parameter erfolgen, die über den Datenbus an das Gerät geschickt werden.

Auf diese Weise ist das Konfigurationsprogramm, das üblicherweise als auf einem üblichen Computer lauffähiges Computerprogramm ausgebildet ist, unabhängig von den jeweiligen Geräten einsetzbar und enthält aufgrund der variablen, über den gerätespezifischen Definitionsabschnitt automatisch konfigurierbaren Funktionsumfang eine speziell auf das jeweilige Gerät zugeschnittene Oberfläche.

Weitere vorteilhafte Ausführungen der Erfindung sind in den Unteransprüchen angegeben.

Die Erfindung wird nachfolgend anhand eines Ausführungsbeispiels unter Bezugnahme auf die Zeichnungen näher beschrieben; in diesen zeigen:
- Figur 1: eine schematische Darstellung der Generierung von unterschiedlichen Elementen aus einem einheitlichen Definitionsabschnitt,
- Figur 2: ein Blockschaltbild eines Bussystems mit erfindungsgemäß ausgebildeten Vorrichtungen,
- Figur 3: eine schematische Darstellung der Kommunikation zwischen einer erfindungsgemäß ausgebildeten Vorrichtung und einer Konfigurationseinheit und
- Figur 4: die erfindungsgemäße Aufteilung in herstellerspezifisches und anwendungsspezifisches Profil.

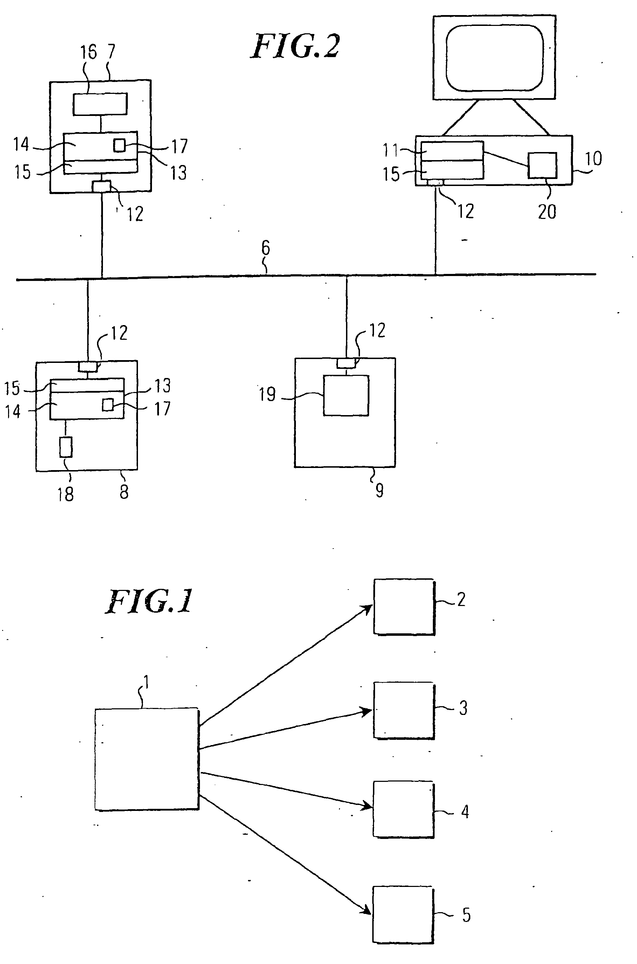

Figur 1 zeigt einen beispielsweise als XML-Datei abgelegten universellen Definitionsabschnitt 1 (universelle Gerätebeschreibung), in dem alle Facetten und Informationen einer einen Sensor, einen Aktor oder eine Steuerung bildenden elektronischen Vorrichtung in einem fest vorgegebenen Format abgespeichert sind. Wesentliche Elemente sind dabei beispielsweise eine Kommunikationsinterfacebeschreibung sowie eine Visualisierungsinterfacebeschreibung für ein Konfigurationsprogramm der elektronischen Vorrichtung.

Gemäß der Erfindung sind aus dem universellen Definitionsabschnitt eine Vielzahl von unterschiedlichen gerätespezifischen Elementen erzeugbar, beispielsweise eine Dokumentation 2 (in einem Text oder Wordprozessor-Format). Diese Dokumentation kann ausgedruckt oder an einem Rechner gelesen werden und ist automatisch immer vollständig und auf dem aktuellen Gerätestand.

Eine weitere Umsetzung von Daten aus dem universellen Definitionsabschnitt 1 kann in der Erzeugung von Programmcode 3 für die elektronische Vorrichtung erfolgen. Dieser erzeugte Programmcode kann beispielsweise in die Firmware des Gerätes eingebunden werden und den Schnittstellencode für die Anbindung der elektronischen Vorrichtung an ein bestimmtes Busprotokoll, Programmcode zur Überprüfung bestimmter Abhängigkeiten zwischen einzelnen Geräteparametern oder Verweise auf außerhalb der Vorrichtung gespeicherte gerätespezifische Daten umfassen.

Weiterhin sind Umsetzungen von in dem universellen Definitionsabschnitt 1 gespeicherten Daten in für ein Konfigurationsprogramm relevante Daten 4, beispielsweise Visualisierungsparameter, Abhängigkeitsbedingungen zwischen einzelnen Parametern oder Code für Bibliothekselemente für das Konfigurationsprogramm möglich.

Letztlich ist aus dem universellen Definitionsabschnitt 1 auch die automatische Erzeugung einer Gerätebeschreibung 5 für unterschiedliche Feldbusse, beispielsweise eine GSD-Datei für den Profibus, möglich.

Figur 2 zeigt einen Datenbus 6, an den zwei erfindungsgemäß ausgebildete elektronische Vorrichtungen 7, 8, ein externer Datenspeicher 9 sowie eine als auf einem Computer 10 laufendes Computerprogramm ausgebildete Konfigurationseinheit 11 angeschlossen sind.

Die Vorrichtung 7 umfasst zum Anschluss an den Datenbus 6 eine integrierte Busschnittstelle 12, über die ein innerhalb der Vorrichtung 7 vorgesehener Steuerabschnitt 13 mit an den Datenbus 6 angeschlossenen Vorrichtungen kommunizieren kann. Der Steuerabschnitt 13 umfasst dabei einen Anwendungsabschnitt 14 sowie einen Businterfaceabschnitt 15, durch den die von dem Anwendungsabschnitt 14 erzeugten Daten in das verwendete Busprotokoll umgesetzt werden beziehungsweise über den Bus empfangene Daten in ein entsprechendes Format für den Anwendungsabschnitt 14 konvertiert werden.

Weiterhin umfasst die Vorrichtung 7 einen gerätespezifischen Definitionsabschnitt 16, der für das Gerät 7 wesentliche, aus dem universellen Definitionsabschnitt 1 (Figur 1) erzeugte Parameter enthält. Der gerätespezifische Definitionsabschnitt 16 ist dabei über den Steuerabschnitt 13 adressierbar, so dass beispielsweise in dem gerätespezifischen Definitionsabschnitt 16 abgelegte Parameter auf Anforderung einer an dem Datenbus 6 angeschlossenen weiteren Vorrichtung über die Schnittstelle 12 und den Datenbus 6 kommuniziert werden können.

Neben dem Businterfaceabschnitt 15 umfasst der Steuerabschnitt 13 noch ein weiteres Steuerabschnittselement 17, das ebenfalls aus dem universellen Definitionsabschnitt 1 erzeugt und in den Steuerabschnitt 13 eingebunden ist und funktionale Abhängigkeiten zwischen einzelnen Parametern der Vorrichtung 7 beschreibt. Über diese in dem Steuerabschnittselement 17 gespeicherten funktionalen Abhängigkeiten ist eine automatische Überprüfung von vorgegebenen Bedingungen zwischen Geräteparametern möglich, so dass fehlerhafte Parametrierungen automatisch erkannt und vermieden werden.

Die Vorrichtung 8 unterscheidet sich von der Vorrichtung 7 lediglich dadurch, dass nicht der gesamte spezifische Definitionsabschnitt 16, sondern nur ein Teil eines gerätespezifischen Definitionsabschnittes 18 unmittelbar in der Vorrichtung 8 enthalten ist. Dieser gerätespezifische Definitionsabschnitt 18 enthält beispielsweise Verweise auf gerätespezifische Elemente 19, 20, die beispielsweise in dem externen Datenspeicher 9 und/oder in einem Speicher des Computers 10 abgelegt sind. Auf diese Weise kann der Speicherbedarf des Gerätes 8 reduziert werden.

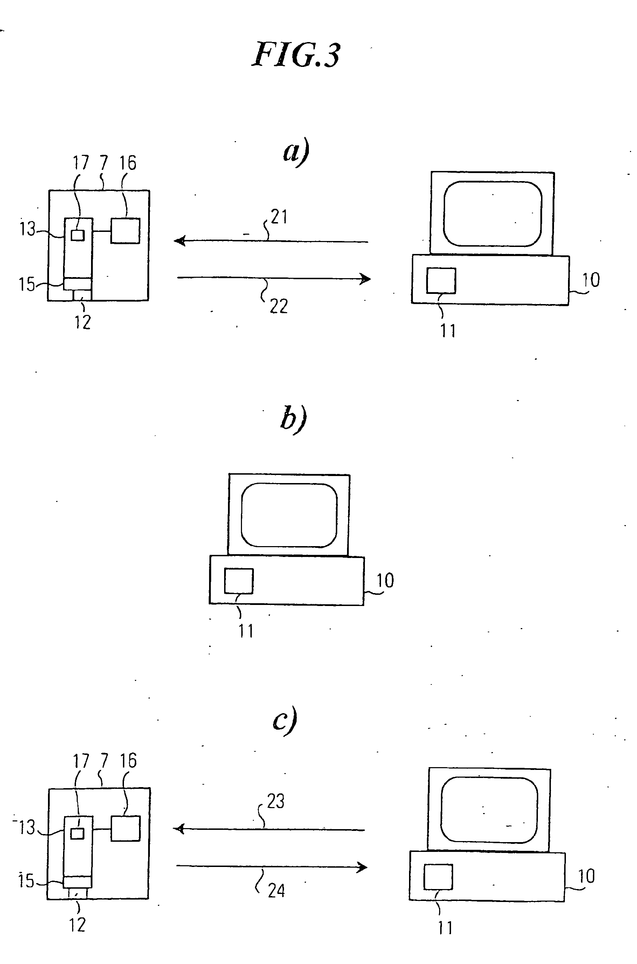

In Figur 3 ist die Kommunikation zwischen der erfindungsgemäß ausgebildeten Vorrichtung 7 und der Konfigurationseinheit 11 an einem Beispiel dargelegt. In einem in Figur 3 a) dargestellten ersten Schritt wird von der Konfigurationseinheit 11 über den Datenbus 6 ein standardisierter Befehl zu der Vorrichtung 7 geschickt, mit der die Lieferung der gerätespezifischen Parameter, wie sie in dem gerätespezifischen Definitionsabschnitt 16 abgespeichert sind, angefordert werden. Diese Anforderung ist durch einen Pfeil 21 angedeutet.

Auf diese Anforderung übersendet die Vorrichtung 7 die spezifische Gerätebeschreibung in einem definierten Standardformat an die Konfigurationseinheit 11, wie es durch einen Pfeil 22 dargestellt ist.

Die übersandten Parameter werden in Figur 3 b) von der Konfiguratiönseinheit 11 interpretiert, woraufhin eine speziell für das Gerät zugeschnittene Oberfläche der Konfigurationseinheit (Konfigurationsprogramm) 11 erzeugt wird. Abhängig von den empfangenen gerätespezifischen Parametern werden somit Masken, Feldinhalte, Hilfetexte, Tooltipps und dergleichen automatisch in dem Konfigurationsprogramm 11 angepasst, so dass aus dem zunächst allgemeinen Konfigurationsprogramm ein speziell an die Vorrichtung 7 angepasstes Konfigurationsprogramm erzeugt wird.

Über diese spezielle angepasste Oberfläche der Konfigurationseinheit 11 können gemäß Figur 3 c) die gewünschten Änderungen an den Geräteparametern vorgenommen werden, wobei bereits innerhalb der Konfigurationseinheit eine Überprüfung vorgegebener funktionaler Abhängigkeiten zwischen den Parametern mittels entsprechender, aus dem universellen Definitionsabschnitt 1 generierter Regeln überprüft werden. Die zu ändernden Parameter werden gemäß einem Pfeil 23 in die Vorrichtung übertragen, wo ebenfalls eine Überprüfung der innerhalb des Steuerelements 17 äbgespeicherten funktionalen Abhängigkeiten durchgeführt wird.

Treten bei dieser Überprüfung keine Fehler auf, so gibt die Vorrichtung 7 eine Okay-Meldung gemäß dem Pfeil 24 an die Konfigurationseinheit 11 zurück. Anderenfalls wird eine Fehlermeldung erzeugt.

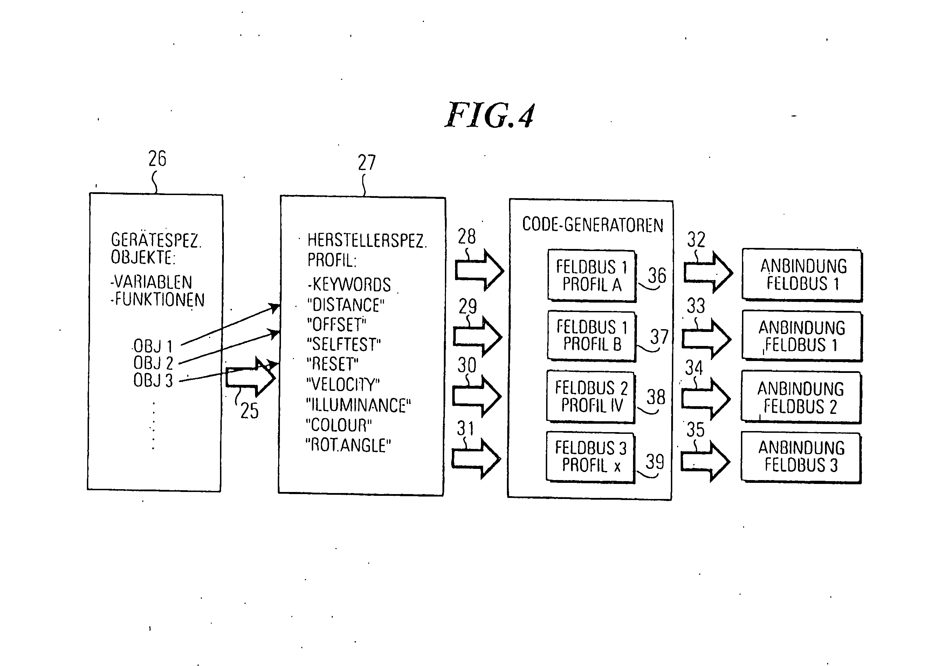

Figur 4 zeigt die erfindungsgemäße Trennung von herstellerspezifischen Gerätprofilen und anwendungsspezifischen Profilen.

Gemäß Figur 4 erfolgt während der Entwicklung des Gerätes in einem ersten, einmaligen Schritt eine durch einen Pfeil 25 dargestellte Abbildung von gerätespezifischen Objekten 26 auf ein herstellerspezifisches Profil 27. Die entsprechenden gerätespezifischen Objekte können dabei wiederum aus dem universalen Definitionsabschnitt 1 entnommen werden.

Die Entwicklung der Abbildung 25 erfolgt nur einmal pro Gerät und setzt insbesondere keine Kenntnis von Anwendungsprofilen voraus.

Erst nach Vorgabe eines Anwendungsprofils wird basierend auf dem herstellerspezifischen Profil 27 eine zweite Abbildung generiert, die jeweils abhängig von dem gewünschten Anwendungsprofil ist. Entsprechende vier Abbildungen sind in Figur 4 durch Pfeile 28, 29, 30 und 31 dargestellt. Beispielsweise liefert die Abbildung 28 die Umsetzung des herstellerspezifischen Profils 27 auf einen Feldbus 1 mit Profil A (Anwendungsprofil 36), während die Abbildung 29 die Umsetzung auf den Feldbus 1 mit Profil B (Anwendungsprofil 37) darstellt. In ähnlicher Weise stellen die Pfeile 30, 31 die Abbildungen jeweils aus dem herstellerspezifischen Profil 27 auf unterschiedliche Feldbusse mit unterschiedlichen Anwendungsprofilen 38, 39 dar. Über die erzeugten anwendungsspezifischen Profile 36, 37, 38, 39 ist dann jeweils eine Anbindung an den vorgegebenen Feldbus möglich, wie es durch Pfeile 32 bis 35 dargestellt ist.

Soll eine der Anwendungsprofile 36, 37, 38, 39 geändert oder ein neues Anwendungsprofil hinzugefügt werden, so ist ausschließlich eine entsprechende Teilabbildung von dem herstellerspezifischen Profil 27 auf das geänderte/neue Anwendungsprofil erforderlich. Die Teilabbildung 25 von den gerätespezifischen Objekten 26 auf das herstellerspezifische Profil 27 ist davon nicht betroffen.

## Patentansprüche

1. Einen Sensor, einen Aktor oder eine Steuerung bildende elektronische Vorrichtung (7, 8) mit einem Steuerabschnitt (13) sowie einer integrierten Busschnittstelle (12), über die die Vorrichtung (7, 8) an einen Datenbus (6) zur Kommunikation der Vorrichtung (7, 8) mit zumindest einer weiteren an dem Datenbus angeschlossenen, einen Sensor, einen Aktor oder eine Steuerung bildenden Vorrichtung (7, 8) anschließbar ist, und mit einem gerätespezifischen Definitionsabschnitt (16, 18, 19), in dem für die Kommunikation, Funktion und/oder Konfiguration der elektronischen Vorrichtung (7, 8) erforderliche Parameter abgelegt sind, wobei der gerätespezifische Definitionsabschnitt (16, 18, 19) in einem gerätespezifischen Format vorliegt und die Parameter über den Steuerabschnitt (13) zugreifbar sind,
**dadurch gekennzeichnet,**
**dass** in der elektronischen Vorrichtung (7, 8) ein in einem geräteunabhängigen, standardisierten Format vorliegender, universeller Definitionsabschnitt (1) vorgesehen ist, in dem alle für die Kommunikation, Funktion und Konfiguration erforderlichen Parameter der elektronischen Vorrichtung (7, 8) sowie zusätzliche, die elektronische Vorrichtung (7, 8) kennzeichnende Parameter abgelegt sind, und dass der gerätespezifische Definitionsabschnitt (16, 18, 19) automatisch aus dem universellen Definitionsabschnitt (1) erzeugt wird.

2. Vorrichtung nach Anspruch 1,
**dadurch gekennzeichnet,**
**dass** aus dem universellen Definitionsabschnitt (1) weitere gerätespezifische Elemente (3, 4, 5), insbesondere Steuerabschnittselemente (15, 17), herstellerspezifische Geräteprofile (27), Funktions-elemente (15, 20) einer für die elektronische Vorrichtung (7, 8) vorgesehenen Konfigurationseinheit (11) und/oder Dokumentationen (2) automatisch erzeugbar sind.

3. Vorrichtung nach Anspruch 2,
**dadurch gekennzeichnet,**
**dass** das herstellerspezifische Geräteprofil (27) unabhängig von anwendungsspezifischen Gegebenheiten wie beispielsweise Busprotokoll, Anwendungsfeld oder dergleichen ist und dass aus dem herstellerspezifischen Geräteprofil ein anwendungsspezifisches Geräteprofil (36, 39) erzeugbar ist.

4. Vorrichtung nach einem der vorhergehenden Ansprüche,
**dadurch gekennzeichnet,**
**dass** zumindest für einen Teil oder für alle in dem universellen Definitionsabschnitt (1) abgelegten Parameter jeweils zusätzlich Versionsinformationen abgelegt sind.

5. Vorrichtung nach einem der vorhergehenden Ansprüche,
**dadurch gekennzeichnet,**
**dass** in dem universellen Definitionsabschnitt (1) funktionale Abhängigkeiten zwischen einzelnen Parametern abgelegt sind.

6. Vorrichtung nach einem der vorhergehenden Ansprüche,
**dadurch gekennzeichnet,**
**dass** der universelle Definitionsabschnitt (1) durch eine oder mehrere Dateien gebildet wird.

7. Vorrichtung nach Anspruch 6,
**dadurch gekennzeichnet,**
**dass** die Datei/Dateien im XML-Format vorliegt/vorliegen.

8. Vorrichtung nach einem der vorhergehenden Ansprüche,
**dadurch gekennzeichnet,**
**dass** der gerätespezifische Definitionsabschnitt (16) innerhalb der elektronischen Vorrichtung (7) vorgesehen ist.

9. Vorrichtung nach einem der Ansprüche 1 bis 7,
**dadurch gekennzeichnet,**
**dass** der gerätespezifische Definitionsabschnitt (18, 19) zumindest teilweise von der elektronischen Vorrichtung (8) getrennt vorgesehen ist.

10. Vorrichtung nach einem der vorhergehenden Ansprüche,
**dadurch gekennzeichnet,**
**dass** innerhalb des gerätespezifischen Definitionsabschnitts (16, 18) automatisch generierte Verweise auf außerhalb der elektronischen Vorrichtung vorhandene gerätespezifische Elemente (19, 20), insbesondere Steuerelemente (20) einer für die elektronische Vorrichtung (7, 8) vorgesehenen Konfigurationseinheit (11) enthalten sind.

11. Vorrichtung nach einem der vorhergehenden Ansprüche,
**dadurch gekennzeichnet,**
**dass** der gerätespezifische Definitionsabschnitt (16, 18) für unterschiedliche elektronische Vorrichtungen (7, 8) von einer an den Datenbus (6) angeschlossenen Steuereinheit, insbesondere von einer für die elektronische Vorrichtung vorgesehenen Konfigurationseinheit (11), über einen einheitlichen, standardisierten, über den Datenbus (6) zu dem Steuerabschnitt (13) transportierten Befehl adressierbar ist.

12. Vorrichtung nach einem der vorhergehenden Ansprüche,
**dadurch gekennzeichnet,**
**dass** eine an den Datenbus (6) anschließbare Konfigurationseinheit (11) für die elektronische Vorrichtung (7, 8) vorgesehen ist, dass der gerätespezifische Definitionsabschnitt (16, 18) von der Konfigurationseinheit (11) adressierbar und auswertbar ist und dass die Konfigurationseinheit (11) abhängig von aus dem gerätespezifischen Definitionsabschnitt (16, 18) ausgelesenen Parametern einen unterschiedlichen gerätespezifischen Funktionsumfang besitzt.

13. Vorrichtung nach Anspruch 12,
**dadurch gekennzeichnet,**
**dass** die Konfigurationseinheit (11) als Computerprogramm (Konfigurationsprogramm) ausgebildet ist.

14. Vorrichtung nach Anspruch 12 oder 13,
**dadurch gekennzeichnet,**
**dass** in dem universellen Definitionsabschnitt (1) Visualisierungsparameter abgelegt sind, die in entsprechende Visualisierungsparameter des gerätespezifischen Definitionsabschnitt (16, 18, 19) umsetzbar sind, und dass sich in Abhängigkeit von den aus dem gerätespezifischen Definitionsabschnitt (16, 18, 19) ausgelesenen Visualisierungsparametern die Oberfläche des Konfigurationsprogramms (11), d.h. das optische Erscheinungsbild des Konfigurationsprogramms, ändert.

15. Vorrichtung nach Anspruch 10,
**dadurch gekennzeichnet,**
**dass** die in dem universellen Definitionsabschnitt (1) abgelegten funktionalen Abhängigkeiten in Funktionselemente (20) der Konfigurationseinheit (11) umsetzbar sind und dass durch die Konfigurationseinheit (11) die Abhängigkeiten zwischen den Parametern mittels der Funktionselemente (20) überprüfbar sind.

16. Vorrichtung nach Anspruch 2,
**dadurch gekennzeichnet,**
**dass** die in dem universellen Definitionsabschnitt (1) abgelegten funktionalen Abhängigkeiten in Steuerabschnittselemente (15, 17) des Steuerabschnitts (13) umsetzbar sind und dass durch den Steuerabschnitt (13) die Abhängigkeiten zwischen den Parametern mittels der Steuerabschnittselemente (15, 17) überprüfbar sind.

17. Bussystem mit einem Datenbus (6) und einer Vielzahl an den Datenbus (6) angeschlossenen Vorrichtungen (7, 8) nach einem der vorhergehenden Ansprüche.

## Claims

1. An electronic apparatus (7, 8) forming a sensor, an actuator or a control and having a control engine (13) as well as an integrated bus interface (12) via which the apparatus (7, 8) can be connected to a data bus (6) for the communication of the apparatus (7, 8) with at least one further apparatus (7, 8) connected to the data bus and forming a sensor, an actuator or a control, and having a device-specific definition engine (16, 18, 19) in which parameters required for the communication, function and/or configuration of the electronic apparatus (7, 8) are stored, with the device-specific definition engine (16, 18, 19) being present in a device-specific format and the parameters being able to be accessed via the control engine (13), **characterized in that** there is provided in the electronic apparatus (7, 8) a universal definition engine (1) which is present in a device-independent, standardized format and in which all the parameters of the electronic apparatus (7, 8) required for the communication, function and configuration as well as additional parameters characterizing the electronic apparatus (7, 8) are stored; and **in that** the device-specific definition engine (16, 18, 19) is generated automatically from the universal definition engine (1).

2. An apparatus in accordance with claim 1, **characterized in that** further device-specific elements (3, 4, 5), in particular control engine elements (15, 17), manufacturer-specific device profiles (27), functional elements (15, 20) of a configuration unit (11) provided for the electronic device (7, 8) and/or documentations (2), can be generated automatically from the universal definition engine (1).

3. An apparatus in accordance with claim 2, **characterized in that** the manufacturer-specific device profile (27) is independent of application-specific circumstances such as of the bus protocol, of the application field or the like; and **in that** an application-specific device profile (36, 39) can be generated from the manufacturer-specific device profile.

4. An apparatus in accordance with any one of the preceding claims, **characterized in that** respective version information is additionally stored for at least some or for all of the parameters stored in the universal definition engine (1).

5. An apparatus in accordance with any one of the preceding claims, **characterized in that** functional dependencies between individual parameters are stored in the universal definition engine (1).

6. An apparatus in accordance with any one of the preceding claims, **characterized in that** the universal definition engine (1) is formed by one or more files.

7. An apparatus in accordance with claim 6, **characterized in that** the file(s) is/are present in XML format.

8. An apparatus in accordance with any one of the preceding claims, **characterized in that** the device-specific definition engine (16) is provided inside the electronic apparatus (7).

9. An apparatus in accordance with any one of claims 1 to 7, **characterized in that** the device-specific definition engine (18, 19) is provided at least partly separate from the electronic apparatus (8).

10. An apparatus in accordance with any one of the preceding claims, **characterized in that** references generated automatically inside the device-specific definition engine (16, 18) to device-specific elements (19, 20) present outside the electronic apparatus, in particular to control elements (20) of a configuration unit (11) provided for the electronic apparatus (7, 8), are included.

11. An apparatus in accordance with any one of the preceding claims, **characterized in that** the device-specific engine (16, 18) can be addressed for different electronic apparatuses (7, 8) by a control unit connected to the data bus (6), in particular by a configuration unit (11) provided for the electronic apparatus, via a uniform, standardized command transported to the control engine (13) via the data bus (6).

12. An apparatus in accordance with any one of the preceding claims, **characterized in that** a configuration unit (11) which can be connected to the data bus (6) is provided for the electronic apparatus (7, 8); **in that** the device-specific definition engine (16, 18) can be addressed and evaluated by the configuration unit (11); and **in that** the configuration unit (11) has a different device-specific functional extent in dependence on parameters read out of the device-specific definition engine (16, 18).

13. An apparatus in accordance with claim 12, **characterized in that** the configuration unit (11) is made as a computer program (configuration program).

14. An apparatus in accordance with claim 12 or claim 13, **characterized in that** visualization parameters are stored in the universal definition engine (1) which can be converted into corresponding visualization parameters of the device-specific definition engine (16, 18, 19); and **in that** the interface of the configuration program (11), i.e. the visual appearance of the configuration program, changes in dependence on the visualization parameters read out of the device-specific definition engine (16, 18, 19).

15. An apparatus in accordance with claim 10, **characterized in that** the functional dependencies stored in the universal definition engine (1) can be converted into functional elements (20) of the configuration unit (11); and **in that** the dependencies between the parameters can be checked by the configuration unit (11) by means of the functional elements (20).

16. An apparatus in accordance with claim 2, **characterized in that** the functional dependencies stored in the universal definition engine (1) can be converted into control engine elements (15, 17) of the control engine (13) ; and **in that** the dependencies between the parameters can be checked by the control engine (13) by means of the control engine elements (15, 17).

17. A bus system comprising a data bus (6) and a plurality of apparatuses (7, 8) connected to the data bus (6) in accordance with any one of the preceding claims.

## Revendications

1. Dispositif (7, 8) électronique formant un capteur, un actionneur ou une commande, comprenant un sous-ensemble de commande (13) ainsi qu'une interface de bus intégrée (12) via laquelle le dispositif (7, 8) peut être branché à un bus de données (7) pour la communication du dispositif (7, 8) avec au moins un autre dispositif (7, 8) raccordé au bus de données et formant un capteur, un actionneur ou une commande, et comprenant un sous-ensemble de définition (16, 18, 19) spécifique à l'appareil, dans lequel sont déposés les paramètres nécessaires pour la communication, la fonction et/ou la configuration du dispositif électronique (7, 8), dans lequel le sous-ensemble de définition (16, 18, 19) spécifique à l'appareil se présente sous un format spécifique à l'appareil, et les paramètres peuvent être accédés via le sous-ensemble de commande (13),
**caractérisé en ce qu'**il est prévu dans le dispositif électronique (7, 8) un sous-ensemble de définition (1) universel présent dans un format standardisé indépendant de l'appareil, dans lequel sont déposés tous les paramètres du dispositif électronique (7, 8) nécessaires pour la communication, la fonction et la configuration, ainsi que des paramètres additionnels qui caractérisent le dispositif électronique (7, 8), et **en ce que** le sous-ensemble de définition (16, 18, 19) spécifique à l'appareil est engendré automatiquement à partir du sous-ensemble de définition universel (1).

2. Dispositif selon la revendication 1, **caractérisé en ce que** d'autres éléments (3, 4, 5) spécifiques à l'appareil, en particulier des éléments de sous-ensemble de commande (15, 17), des profils d'appareil (27) spécifiques au fabricant, des éléments de fonction (15, 20) d'une unité de configuration (11) prévue pour le dispositif électronique (7, 8) et/ou des documentations (2) peuvent être générés à partir du sous-ensemble de définition universel (1).

3. Dispositif selon la revendication 2, **caractérisé en ce que** le profil d'appareil (27) spécifique au fabricant est indépendant de particularités spécifiques à l'application, comme par exemple le protocole de bus, le champ d'application ou similaire, et **en ce qu'**un profil d'appareil (36, 39) spécifique à l'application peut être engendré à partir du profil d'appareil spécifique au fabricant.

4. Dispositif selon l'une des revendications précédentes, **caractérisé en ce que** pour une partie au moins un ou pour tous les paramètres déposés dans le sous-ensemble de définition universel (1), des informations de version additionnelle respective sont déposées.

5. Dispositif selon l'une des revendications précédentes, **caractérisé en ce que** des dépendances fonctionnelles entre les paramètres individuels sont déposées dans le sous-ensemble de définition universel (1).

6. Dispositif selon l'une des revendications précédentes, **caractérisé en ce que** le sous-ensemble de définition universel (1) est formé par un ou plusieurs fichiers.

7. Dispositif selon la revendication 6, **caractérisé en ce que** le ou les fichiers et/sont présent(s) sous le format XML.

8. Dispositif selon l'une des revendications précédentes, **caractérisé en ce que** le sous-ensemble de définition spécifique à l'appareil (16) est prévu à l'intérieur du dispositif électronique (7).

9. Dispositif selon l'une des revendications 1 à 7, **caractérisé en ce que** le sous-ensemble de définition (18, 19) spécifique à l'appareil est prévu au moins partiellement séparé du dispositif électronique (8).

10. Dispositif selon l'une des revendications précédentes, **caractérisé en ce que**, à l'intérieur du sous-ensemble de définition spécifique à l'appareil (16, 18), sont contenues des références générées de façon automatique à des éléments (19, 20) spécifiques à l'appareil présents à l'extérieur du dispositif électronique, en particulier des éléments de commande (20) d'une unité de configuration (11) prévue pour le dispositif électronique (7, 8).

11. Dispositif selon l'une des revendications précédentes, **caractérisé en ce que** le sous-ensemble de définition spécifique à l'appareil (16, 18) est adressable pour différents dispositifs électroniques (7, 8) depuis une unité de commande raccordée au bus de données (6), en particulier depuis une unité de configuration (11) prévue pour le dispositif électronique, via un ordre unitaire, standardisé, transporté via le bus de données (6) au sous-ensemble de commande (13).

12. Dispositif selon l'une des revendications précédentes, **caractérisé en ce qu'**une unité de configuration (11) susceptible d'être branchée au bus de données (6) est prévue pour le dispositif électronique (7, 8), **en ce que** le sous-ensemble de définition spécifique à l'appareil (16, 18) est adressable et exploitable depuis l'unité de configuration, et **en ce que** l'unité de configuration (11) possède un champ fonctionnel spécifique à l'appareil différent, dépendant des paramètres lus depuis le sous-ensemble de définition spécifique à l'appareil (16, 18).

13. Dispositif selon la revendication 12, **caractérisé en ce que** l'unité de configuration (11) est réalisée sous forme de programme d'ordinateur (programme de configuration).

14. Dispositif selon la revendication 12 ou 13, **caractérisé en ce que**, dans le sous-ensemble de définition universel (1) sont déposés des paramètres de visualisation qui peuvent être convertis en paramètres de visualisation correspondants du sous-ensemble de définition spécifique à l'appareil (16, 18, 19), et **en ce que** la surface du programme de configuration (11), c'est-à-dire l'aspect optique du programme de configuration, se modifie en fonction des paramètres de visualisation lus à partir du sous-ensemble de définition spécifique à l'appareil (16, 18, 19).

15. Dispositif selon la revendication 10, **caractérisé en ce que** les dépendances fonctionnelles déposées dans le sous-ensemble de définition universel (1) peuvent être converties dans des éléments fonctionnels (20) de l'unité de configuration (11), et **en ce que** les dépendances entre les paramètres sont susceptibles d'être vérifiées par l'unité de configuration (11) au moyen des éléments fonctionnels (20).

16. Dispositif selon la revendication 2, **caractérisé en ce que** les dépendances fonctionnelles déposées dans le sous-ensemble de définition universel (1) peuvent être converties dans des éléments de sous-ensemble de commande (15, 17) du sous-ensemble de commande (13), et **en ce que** les dépendances entre les paramètres sont susceptibles d'être vérifiées par le sous-ensemble de commande (13) au moyen des éléments de sous-ensemble de commande (15, 17).

17. Système de bus comprenant un bus de données (6) et une pluralité de dispositifs (7, 8) raccordés au bus de données (6), selon l'une des revendications précédentes.
